Europäisches Patentamt

European Patent Office

Office européen des brevets

(19)

(11) **EP 1 378 046 B1**

(12) **EUROPÄISCHE PATENTSCHRIFT**

| | |
|---|---|
| (45) Veröffentlichungstag und Bekanntmachung des Hinweises auf die Patenterteilung:<br>**09.02.2005 Patentblatt 2005/06** | (51) Int Cl.⁷: **H02K 41/03**, H02K 16/00,<br>H02P 6/10, B29C 45/50 |
| (21) Anmeldenummer: **02732587.7** | (86) Internationale Anmeldenummer:<br>**PCT/EP2002/003970** |
| (22) Anmeldetag: **10.04.2002** | (87) Internationale Veröffentlichungsnummer:<br>**WO 2002/089302 (07.11.2002 Gazette 2002/45)** |

(54) **LINEARMOTOR-ANTRIEBSEINHEIT FÜR EINE MASCHINE**

LINEAR MOTOR DRIVE UNIT FOR A MACHINE

UNITE D'ENTRAINEMENT A MOTEURS LINEAIRES DESTINEE A UNE MACHINE

(84) Benannte Vertragsstaaten:
**AT CH DE FR GB IT LI**

(30) Priorität: **12.04.2001 DE 10118420**

(43) Veröffentlichungstag der Anmeldung:
**07.01.2004 Patentblatt 2004/02**

(73) Patentinhaber: **Hehl, Karl**
**72290 Lossburg (DE)**

(72) Erfinder: **Hehl, Karl**
**72290 Lossburg (DE)**

(74) Vertreter: **Reinhardt, Harry**
**Reinhardt & Pohlmann Partnerschaft,**
**Grünstrasse 1**
**75172 Pforzheim (DE)**

(56) Entgegenhaltungen:
| | |
|---|---|
| **DE-A- 10 020 338** | **DE-A- 19 920 626** |
| **US-A- 4 126 797** | **US-A- 4 897 582** |
| **US-A- 5 796 186** | |

• **PATENT ABSTRACTS OF JAPAN vol. 1997, no. 7, 31. Juli 1997 (1997-07-31) & JP 09 065511 A (CANON INC)**

**Beschreibung**

Die Erfindung betrifft eine Antriebseinheit für eine Maschine, insbesondere für eine Spritzgießmaschine zur Verarbeitung von Kunststoffen und anderer plastifizierbarer Massen nach dem Oberbegriff des Anspruches 1.

Aus der DE 199 20 626 A1 ist eine derartige Antriebseinheit bekannt, bei der mehrere Linearmotoren zu einer Antriebseinheit geschachtelt sind. Die Linearmotoren sind zylindrisch und an den Mantelflächen des Läufers sind Magnete sowie an den Mantelflächen des Stators Statorwindungen angeordnet. Mehrere gleichwirkende Mantelflächen sind miteinander verbunden und werden gemeinsam betrieben.

Untersuchungen haben gezeigt, dass durch die Schachtelung mehrerer Linearmotoren, die zu einer Antriebseinheit verbunden sind, zwar die Leistung bei gleichzeitiger kompakter Bauart gesteigert werden kann, jedoch hat sich im Betrieb ein sinusförmiger Kraftverlauf der Antriebseinheit herausgestellt. Der sinusförmige Kraftverlauf wird durch das Grundprinzip von in Reihe im Läufer angeordneten Magnetelementen des Linearmotors hervorgerufen und weist eine Wellenlänge auf, die etwa der Länge der Magnetelemente entspricht. Die DE 100 20 338 A1 schlägt zur Beseitigung dieses Effekts daher bereits vor, bei mehreren parallel betriebenen Linearmotoren deren Elektromotorwinkel schrittweise zu versetzen. Dennoch können Fertigungstoleranzen als auch Verschleißerscheinungen zu Schwankungen im Kraftverlauf führen.

In der DE 197 29 976 A1 wurde bereits festgestellt, dass bei der linearen Bewegung die Kopplung zwischen Magnetpolen einerseits und den Leitern der stromdurchflossenen Spulen andererseits in Abhängigkeit von der geometrischen Lage der beiden Teile zueinander, d.h. zum Beispiel bei Bewegung der beiden Teile, nicht konstant ist. Dadurch bedingt ist die entstehende Schubkraft in Abhängigkeit vom Ort bzw. der Lage des bewegten Teils nicht mehr konstant. Untersuchungsergebnisse zeigen Schwankungen im Kraftverlauf von bis zu 40%.

Zur Lösung dieses Problems wurde in der DE 197 29 976 A1 bereits vorgeschlagen, die Polkanten der Magnetelemente abzuschrägen bzw. mehrere Teilmagnete mit Rechteckform entlang der Läuferfläche gegeneinander zu versetzen.

In der US 5,973,459 A wird einem Linearmotor ein Sollkraftverlauf in Abhängigkeit von der Wegposition der Linearmotoren vorgegeben. Hierbei wird jedoch davon ausgegangen, dass der Magnetfeldverlauf formelmäßig bekannt ist. Ein Krafterfassungsmittel ist nicht vorhanden.

Ein Linearmotor zum Einsatz in einer Spritzgießmaschine wird auch in der EP 0 280 743 A1 vorgeschlagen, jedoch setzt sich die dortige Anmeldung in den Figuren 4 bis 7 lediglich damit auseinander, wie die Bewegung des Linearmotors beim Schalten der verschiedenen Phasen erzeugt wird.

Ausgehend von diesem Stand der Technik liegt der vorliegenden Erfindung die Aufgabe zugrunde, eine Antriebseinheit für eine Maschine zu schaffen, die bei Verwendung eines Linearmotors einen gleichmäßigen Kraftverlauf zeigt.

Diese Aufgabe wird durch eine Antriebseinheit für eine Maschine mit den Merkmalen des Anspruchs 1 gelöst.

Bei dieser Lösung wird versucht, die lageabhängigen Unterschiede in der Vorschubkraft regelungstechnisch auszugleichen. Der Kraftverlauf wird über den Weg des Linearmotors dadurch geregelt, dass eine Leistungssteuerung der einzelnen Linearmotoren über ein Leistungsteil erfolgt. Hierzu wird zumindest bei der Montage, vorzugsweise aber auch beim Betrieb des Linearmotors der Kraftverlauf mit einen Krafterfassungsmittel erfasst. Die so gewonnenen Ergebnisse werden im Betriebszustand zur Steuerung bzw. Regelung der Leistung der Leistungsteile benutzt, so dass sich der gewünschte Kraftverlauf ergibt. Es ergibt sich damit ein "lernendes" System, das unabhängig von Randbedingungen und Fertigungstoleranzen den Kraftverlauf glätten kann.

Diese regelungstechnische Lösung kann einer mechanischen Lösung nach Anspruch 2 überlagert werden, bei der die Magnetelemente und/oder Spulenelemente der parallel zueinander geschalteten Linearmotoren, also verschiedener Linearmotoren, die gemeinsam die Antriebseinheit bilden, zueinander versetzt sind. Dadurch lassen sich die Kraftverläufe der verschiedenen Linearmotoren so überlagern, dass sich ein weitestgehend gleichmäßiger Kraftverlauf ergibt.

Eine weitere Glättung des Kraftverlaufs kann nach den Ansprüchen 10 und 11 dadurch erzielt werden, dass gegebenenfalls auch unabhängig voneinander, d.h. zum Beispiel mit verschiedenen Treppenstufen die Magnete entlang des Umfangs der Mantelflächen der Linearmotoren treppenförmig versetzt werden.

Im folgenden wird die Erfindung anhand der beigefügten Zeichnungen näher eriäutert. Es zeigen:

Figur 1   Eine Seitenansicht einer Maschine, hier einer Spritzgießmaschine mit mehreren Antriebseinheiten,

Figur 2   eine isometrische Darstellung des Antriebs für die Spritzgießeinheit,

Figur 3   einen Querschnitt durch die Antriebseinheit gemäß Figur 2,

Figur 4   einen Schnitt nach Linie 4-4 von Figur 3 in einer Ausführungsform nach dem Stand der Technik,

Figur 5   einen Ausschnitt analog zu Figur 4 in einer ersten erfindungsgemäßen Ausführungsform,

Figur 6   eine Darstellung gemäß Figur 5 in einer zweiten Ausführungsform,

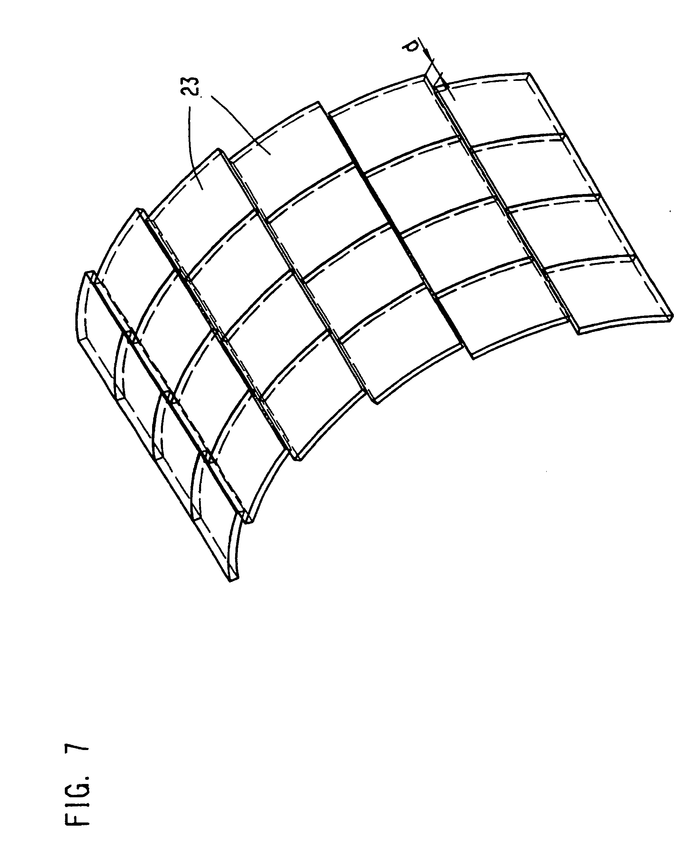

Figur 7   den treppenförmigen Versatz der Magnetelemente entlang des Umfangs des Magnetträgers,

Figur 8,9 einen Kraftverlauf bei Bewegung des Linearantriebs nach dem Stand der Technik sowie nach der erfindungsgemäßen Lösung.

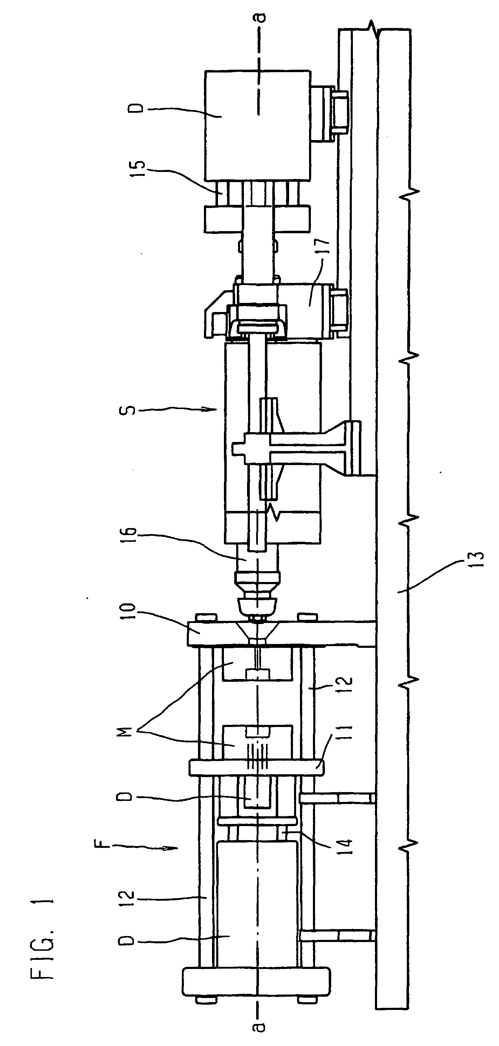

Figur 1 zeigt eine Seitenansicht einer Spritzgießmaschine zur Verarbeitung von Kunststoffen und anderer plastifizierbarer Massen wie z.B. keramischer oder pulvriger Massen, die mehrere Antriebseinheiten D aufweist. Gleichwohl kann die im folgenden beschriebene Antriebseinheit auch an beliebigen anderen Maschinen eingesetzt werden, bei denen Linearantriebe verwendbar sind. Das Ausführungsbeispiel wird jedoch im folgenden anhand der Spritzgießmaschine näher erläutert.

Eine derartige Kunststoff-Spritzgießmaschine besitzt eine Spritzgießeinheit S sowie eine Formschließeinheit F, die auf einem Maschinenfuß 13 angeordnet sind. Zwischen einem stationären Formträger 10 und einem von einer Antriebseinheit D betriebenen beweglichen Formträger 11 ist eine Spritzgießform M aufnehmbar, die zyklisch von der Formschließeinheit F bewegt wird. Die Antriebseinheit D zum Schließen der Form ist über Holme 12 mit dem stationären Formträger 10 verbunden, wobei die Holme meist zugleich auch dem beweglichen Formträger 11 als Führung dienen. Bei Betätigung der Antriebseinheit D wird der bewegliche Formträger 11 zusätzlich an Führungselementen 14 geführt.

Bei geschlossener Spritzgießform M spritzt die Spritzgießeinheit S im Plastifizierzylinder 16 plastifiziertes Material in den Formhohlraum der Spritzgießform M ein. Der Plastifizierzylinder 16 ist an einer Einspritzbrücke 17 aufgenommen. Über die spritzgießseitige Antriebseinheit D wird die Einspritz- und Rückzugsbewegung, also die Axialbewegung der zeichnerisch nicht dargestellten, im Plastifizierzylinder 16 aufgenommenen Förderschnecke erzeugt. Die Antriebseinheit D ist dabei von Führungen 15 durchdrungen. Die Antriebseinheit D kann aber auch formschließseitig im Bereich des Auswerfers verwendet werden.

Grundsätzlich kann eine derartige Antriebseinheit D bevorzugterweise dort eingesetzt werden, wo Linearbewegungen zielgenau mit großer Kraft erzeugt werden müssen. Dies gilt grundsätzlich auch außerhalb des Bereichs der Spritzgießmaschinen, wie eingangs angedeutet.

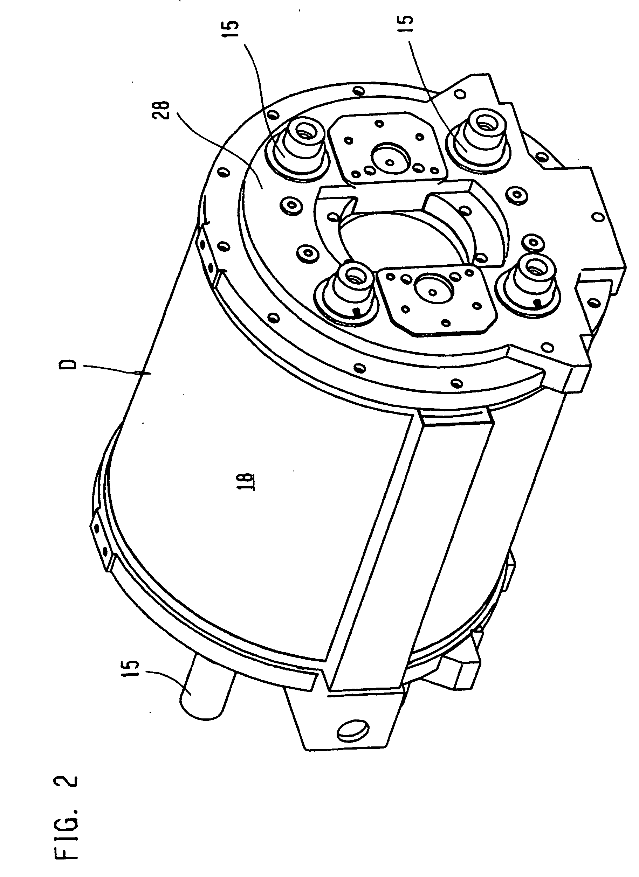

Die Antriebseinheit D ist gemäß Figur 2 in einem Gehäuse 18 angeordnet, das mittels Deckel 28 verschlossen ist. Zur Führung der Antriebseinheit D ist das Gehäuse von den Führungselementen 15 durchdrungen. Anhand dem in Figur 2 dargestellten Antrieb für die axiale Schneckenfahrbewegung wird im folgenden das Ausführungsbeispiel erläutert.

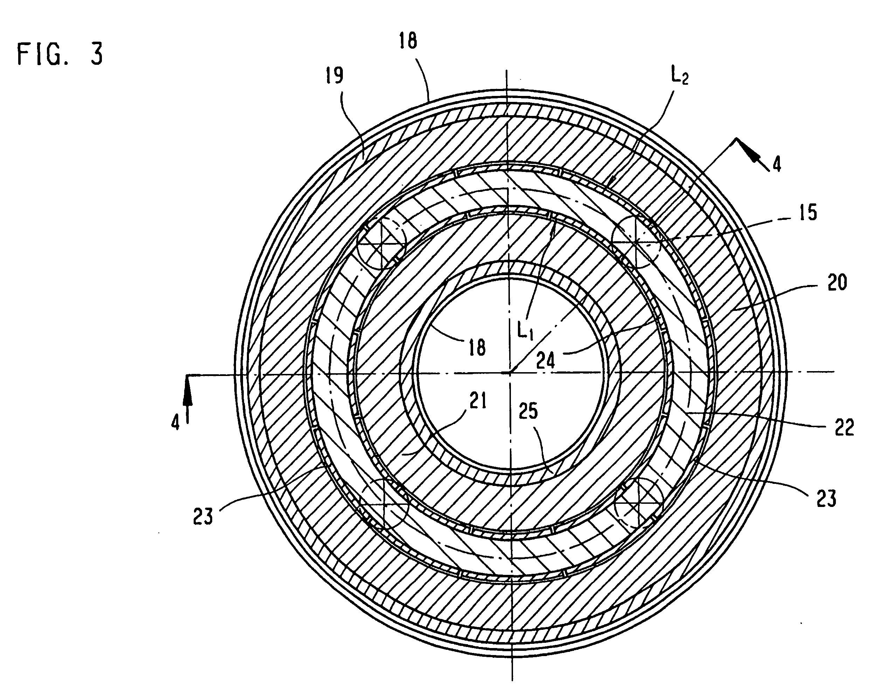

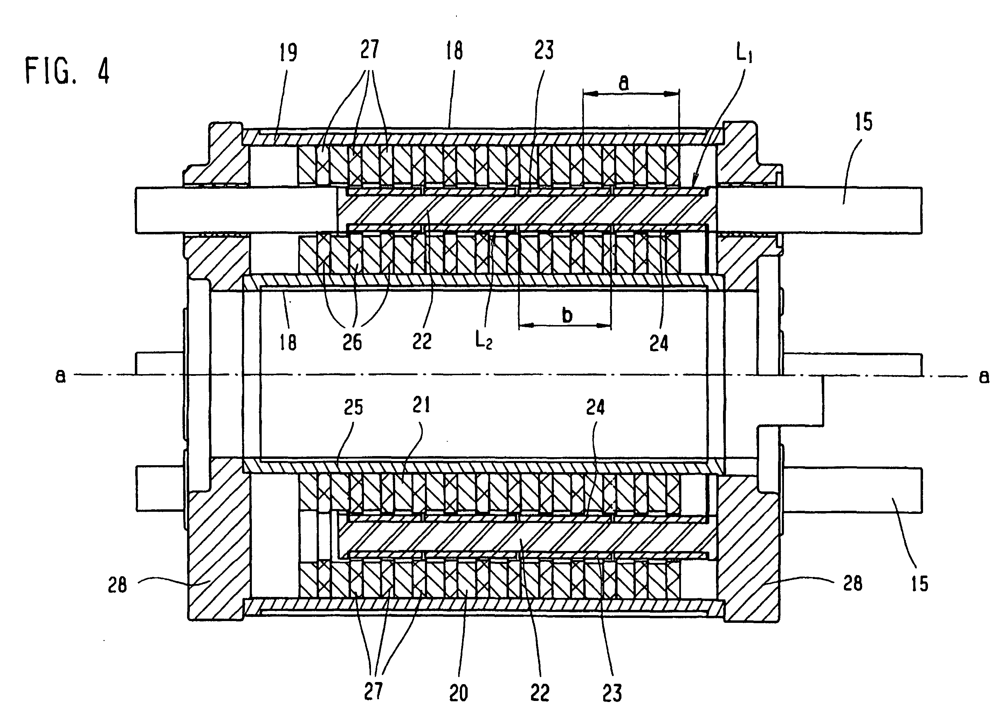

Den Ausführungsbeispielen ist gemeinsam, dass grundsätzlich mehrere parallel zueinander in einer gemeinsamen Vorschubrichtung angeordnete Linearmotoren L1,L2 vorgesehen sind, deren gleichwirkende Teile zur gemeinsamen Bewegung miteinander verbunden sind. Im Ausführungsbeispiel sind die Linearmotoren zwar zylinderförmig und koaxial zueinander angeordnet, so dass sie gemäß den Figuren 3,4 ineinander geschachtelt werden können, grundsätzlich genügt für das Prinzip der Erfindung jedoch, dass lediglich mehrere Linearmotoren parallel zueinander angeordnet, jedoch zur gemeinsamen Bewegung miteinander verbunden sind.

Figur 4 zeigt einen Linearmotor, wie er aus der DE 199 20 626 A1 bekannt ist. Beide Linearmotoren L1,L2 weisen in Vorschubrichtung a-a aneinander angereiht Magnetelemente 23,24 und damit in Wirkverbindung stehende Spulenelemente 26,27 auf gegenüberliegenden, jedoch miteinander zusammenwirkenden Flächen auf. Die Länge b der Magnetelemente 23,24 und die Länge a eines Pakets aus Spulenelementen ist vorzugsweise identisch. Die Anzahl der Spulenelemente, die zu einem Paket verbunden sind, ist abhängig von der Anzahl der Phasen, mit denen der Motor betrieben wird. Beim Betrieb werden die den einzelnen Phasen zugeordneten Spulenelemente nacheinander beschaltet, so dass ein Magnetfeld induziert wird. Dadurch werden die Magnetelemente 23,24 wechselweise angezogen bzw. abgestoßen, so dass sich die erwünschte Bewegung der Linearmotoren L1,L2 bzw. der Antriebseinheit D ergibt. Während der Bewegung sind die Teile der Antriebseinheit an den Führungselementen 15 geführt. Dies ergibt einerseits einen kompakten Aufbau, andererseits sind die Teile der Motoren sorgfältig ineinander geführt.

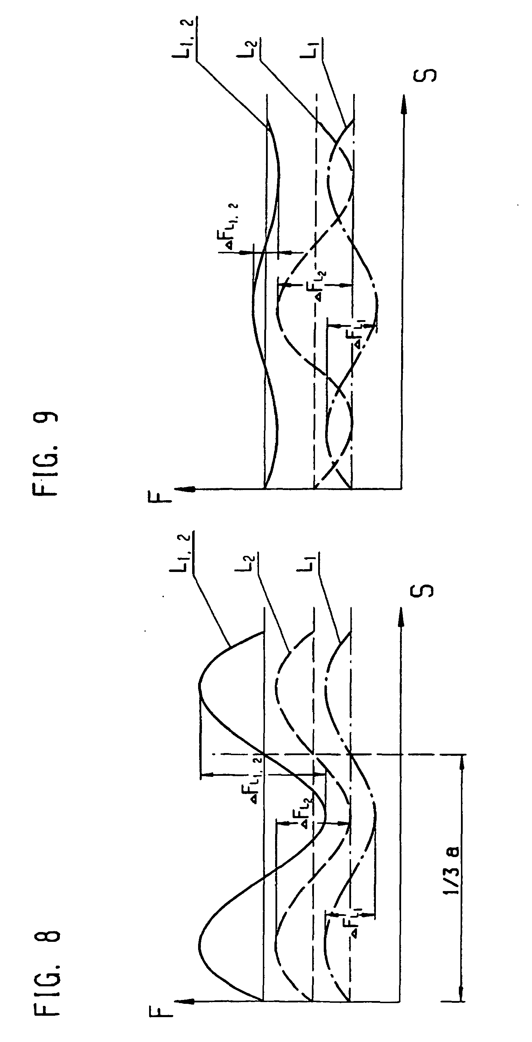

Gemäß Figur 4 werden im Stand der Technik die Magnetelemente 23,24 als auch die Spulenelemente 26,27 der - hier zwei - Linearmotoren im Schnittbild deckungsgleich zueinander angeordnet. Dies hat den Nachteil, dass bei der linearen Bewegung die Kopplung zwischen Magnetpolen einerseits und den Spulenelementen andererseits in Abhängigkeit von der geometrischen Lage der beiden Teile zueinander nicht konstant ist. Dies führt zu periodischen Schubkraftschwankungen, wie sie in Figur 8 dargestellt sind. Während die einzelnen Linearmotoren L1,L2 jeweils für sich noch eine geringe Kraftschwankung $?F_{L1}$ bzw. $?F_{L2}$ aufweisen, führt die Deckungsgleichheit zu einer Verstärkung dieser Schwankung, die sich in $?F_{L1,L2}$ wiederfindet.

Allgemein gilt, dass üblicherweise zwischen dem Maß a ( = Länge des Spulenpakets) und dem Maß b ( = Länge des Magnetelements) ein ganzzahliges Verhältnis besteht. Dabei sollte eine Magnetlänge b mindestens von einem Paket Spulenelemente 26,27 überdeckt sein. Optimale Ergebnisse stellen sich bei identischen Längen a, b ein, bedarfsweise kann jedoch auch die Länge b des Magnetelements 23,24 ein ganzzahliges Vielfaches der Länge des Pakets an Spulenelementen 26,27 sein.

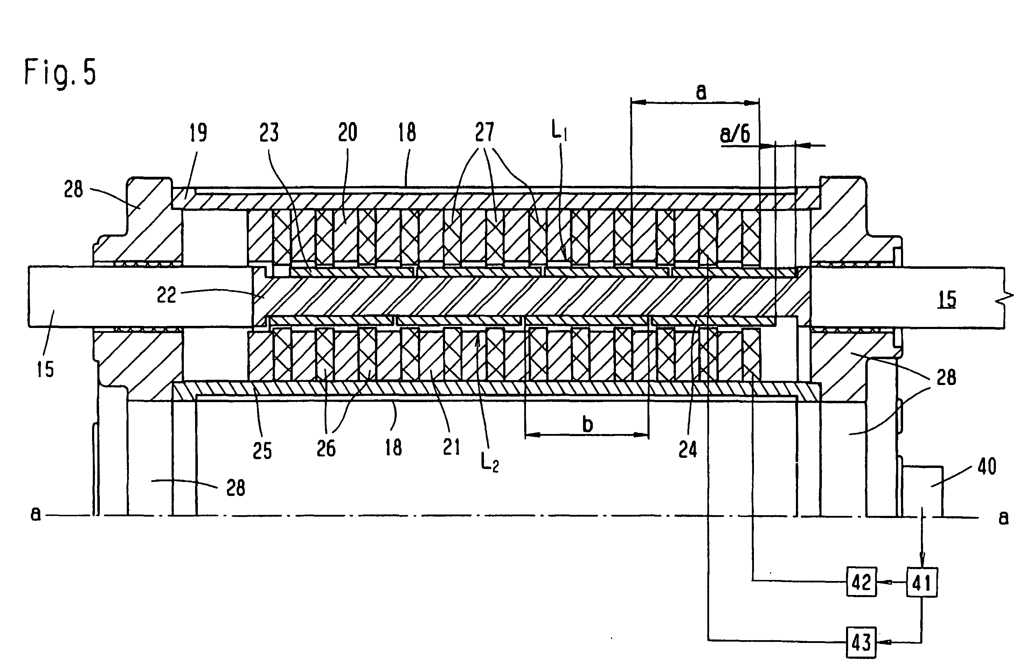

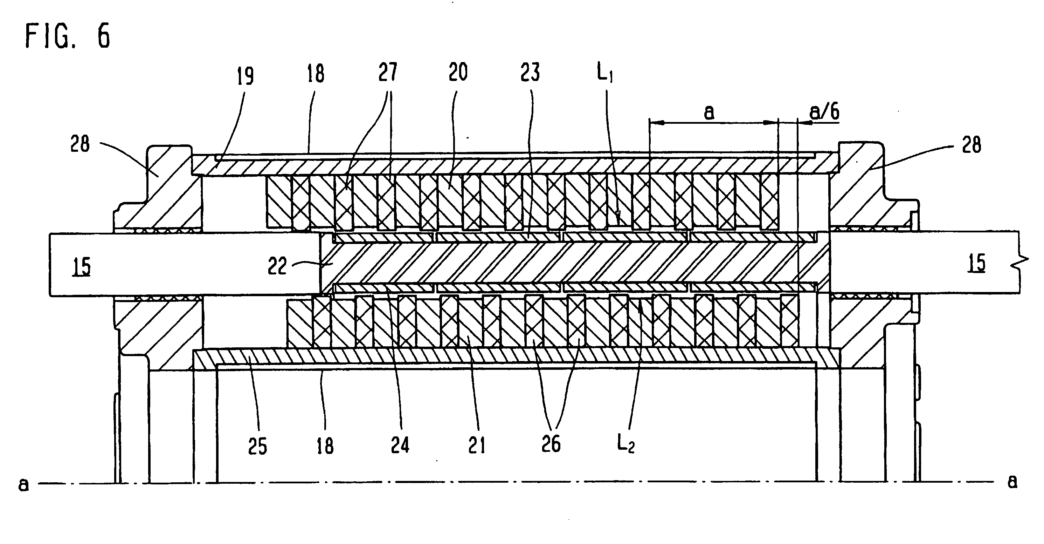

Um die lageabhängigen Unterschiede in der Vorschubkraft auszugleichen, werden in Figur 5 die Magnetelemente 23,24 und in Figur 6 die Spulenelemente 26,27 der verschiedenen Linearmotoren L1,L2 in Vorschubrichtung a-a zueinander versetzt. Grundsätzlich können aber auch sowohl die Magnetelemente 23,24 als auch die Spulenelemente 26,27 in derselbe Antriebseinheit zueinander versetzt werden. Der Versatz v lässt sich nach der Formel

$$v = a / (p) \times 2$$

berechnen mit

p = Anzahl der Phasen des Motors
a = Länge eines Spulenpakets mit p Phasen.

Bei einem dreiphasigen Motor ergibt sich damit gemäß Figur 5 bzw. Figur 6 der Versatz zu a/6, bei einem zweiphasigen Motor wäre der Versatz entsprechend a/4, um eine möglichst gute Glättung zu erhalten. Eine derartige Anordnung führt zu einem Kraftverlauf gemäß Figur 9. Die Unterschiede im Kraftverlauf entlang des Weges s, nämlich ? $F_{L1}$ zu ? $F_{L2}$ sind nun Phasen verschoben, so dass sich der obere geglättete Kraftverlauf ergibt.

Anstelle der mechanischen Lösung, bei der die Magnetelemente 23,24 und/oder die Spulenelemente 26,27 gemäß den Figuren 5 bzw. 6 zueinander versetzt sind, ggf. aber auch ergänzend zu dieser mechanischen Lösung, kann auch regelungstechnisch versucht werden, über entsprechende Leistungteile 42,43 den Kraftverlauf zu glätten. Zu diesem Zweck wird in Figur 5 schematisch eine Regelung dargestellt, die ein Krafterfassungsmittel 40, einen Regler 41 und wenigstens ein Leistungsteil 42,43 aufweist. In Abhängigkeit der wegabhängig erfassten Kraft wird damit die Kraft des Linearmotors je nach der Wegposition des Läufers gegenüber dem Stator des Linearmotors zu einem Sollverlauf gesteuert bzw. geregelt. Dies kann über ein Leistungsteil erfolgen, das dann auf den gemeinsamen Kraftverlauf einwirkt, vorzugsweise wird man jedoch jedem Linearmotor L1,L2 je ein gesondertes Leistungsteil 42,43 zuordnen, um eine bessere Regelung zu ermöglichen. In diesem Fall können sie unabhängig voneinander in ihrer Leistung geregelt werden. Es wird also nicht auf den summarischen Verlauf beider Linearmotoren eingewirkt, statt dessen wird dann, wenn der eine Motor einen Tiefpunkt hat, dieser verstärkt betrieben, selbst wenn der andere Linearmotor in diesem Moment auf seinem Hochpunkt steht.

Grundsätzlich genügt es, wenn dies einmalig nach Montage des Linearmotors erfolgt, da die Lage der Magnetelemente sich nicht mehr ändert und damit die Schwankungen in der Vorschubkraft bekannt sind. In diesem Fall wird der einmal ermittelte Verlauf der Leistung, die den jeweiligen Linearmotoren zugeführt wird, für den weiteren Gebrauch festgelegt und der Antrieb entsprechend gesteuert betrieben. Es macht jedoch auch Sinn, den Sollverlauf auf Dauer zu regeln, da es sowohl durch äußere Randbedingungen oder Verschleiß zu Änderungen im Kraftverlauf kommen kann. Der Kraftverlauf wird über den Weg des Linearmotors dadurch geregelt, dass eine Leistungssteuerung bzw. Leistungsregelung der einzelnen Linearmotoren über wenigstens ein Leistungteil erfolgt. Hierzu wird zumindest bei der Montage, vorzugsweise aber auch beim Betrieb des Linearmotors der Kraftverlauf mit einen Krafterfassungsmittel erfasst. Die so gewonnenen Ergebnisse werden im Betriebszustand zur Steuerung bzw. Regelung der Leistung der Leistungteile benutzt, so dass sich der gewünschte Kraftverlauf ergibt. Wie gesagt, kann dies der mechanischen Lösung überlagert sein.

Die Ausführungsbeispiele zeigen eine Anordnung mit zylindrischen Linearmotoren, die ineinander geschachtelt sind. Auf einem Magnetträger 22 sind die Magnetelemente 23,24 der beiden Linearmotoren L1,L2 angeordnet, während auf einem außen liegenden Spulenring 20 oder besser Spulenzylinder und einem innen liegenden Spulenring 21 oder besser Spulenzylinder die Spulenelemente 26,27 angeordnet sind. Die Spulenringe stellen insofern den Stator dar. Diese Schachtelung ergibt einen Platz sparenden Aufbau, jedoch ist es grundsätzlich möglich, anstelle dieser Anordnung verschiedene Linearmotoren L1,L2 symmetrisch zu einer gemeinsamen Wirkachse a-a anzuordnen, wenngleich in diesem Fall vorzugsweise auch darauf geachtet werden sollte, dass sich auch zwischen den verschiedenen Linearmotoren ein symmetrischer Kraftverlauf entlang der Vorschubrichtung a-a, also z.B. entlang einer mittigen Wirkachse ergibt. Dies kann z.B. dadurch erfolgen, dass vier Linearmotoren paarweise über Kreuz angeordnet sind, von denen je zwei paarweise symmetrisch zur Mittelachse angeordnet und hinsichtlich der Anordnung der Magnetoder Spulenelemente identisch ausgebildet sind.

Im konkreten Ausführungsbeispiel der Figuren 5 und 6 sind die Magnetelemente 24 und/oder Spulenelemente 26 des innen liegenden Linearmotors L2 zu den Magnetelementen 23 und/oder Spulenelementen 27 des außen liegenden Linearmotors axial so versetzt, dass sich die lageabhängigen Unterschiede in der Vorschubkraft aufheben.

Die gewünschte Glättung des Kraftverlaufs kann dadurch gesteigert werden, dass gemäß Figur 8 die Magnetelemente 23,24 Spulenelemente 26,27 wenigstens eines Linearmotors L1,L2 entlang seines Umfangs, also z.B. auf der Mantelfläche des hohlzylindrischen Läufers (Magnetträger 22) treppenförmig versetzt sind. Dabei ist denkbar, den treppenförmigen Versatz d der einzelnen Linearmotoren L1,L2 verschieden und damit voneinander unabhängig zu wählen. Grundsätzlich ist ebenso möglich, die Länge a der Magnetelemente bei den einzelnen Linearmotoren unabhängig voneinander zu wählen, es sollte dann lediglich sichergestellt sein, dass die Länge b der Pakete der Spulenelemente 26,27 auf die Länge a abgestimmt ist. E-beriso wäre denkbar die Spulenelemente in der Form eines Ellipsoids an der Mantelfläche des zylindrischen Linearmotors anzuordnen.

Bezugszeichenliste

| 10 | stationärer Formträger |
| 11 | beweglicher Formträger |
| 12 | Führungsholme |
| 13 | Maschinenfuss |
| 14,15 | Führung |
| 16 | Plastifizierzylinder |
| 17 | Einspritzbrücke |
| 18 | Gehäuse |
| 19 | Mantel |
| 20 | Spulenring außen |
| 21 | Spulenring innen. |
| 22 | Magnetträger |
| 23,24 | Magnetelement |
| 25 | Innenmantel |
| 26,27 | Spulenelement |
| 28 | Deckel |
| 40 | Krafterfassungsmittel |
| 41 | Regelung |
| 42,43 | Leistungsteil |
| a | Länge Paket Spulenelemente |
| b | Länge Magnetelement |
| a-a | Vorschubrichtung |
| d | Versatz |
| s | Weg |
| D | Antriebseinheit |
| F | Formschließeinheit |
| L1, L2 | Linearmotor |
| M | Spritzgießform |
| S | Spritzgießeinheit |

**Patentansprüche**

1. Antriebseinheit (D) für eine Maschine, insbesondere eine Spritzgießmaschine zur Verarbeitung von Kunststoffen und anderer plastifizierbarer Massen mit mehreren parallel zueinander in einer gemeinsamen Vorschubrichtung (a-a) angeordneten Linearmotoren (L1,L2), deren gleichwirkende Teile zur gemeinsamen Bewegung miteinander verbunden sind, wobei die Linearmotoren (L1,L2) in Vorschubrichtung Magnetelemente (23,24) und damit in Wirkverbindung stehende Spulenelemente (26,27) aufweisen, wobei den Linearmotoren wenigstens ein Leistungsteil (42,43) zugeordnet ist, **dadurch gekennzeichnet, dass** Krafterfassungsmittel (40) zur Erfassung der wegabhängigen Kraft der Linearmotoren (L1,L2) zumindest bei der Montage bzw. Inbetriebnahme vorgesehen sind und dass ein Regler (41) im Betriebszustand die den Linearmotoren (L1,L2) vom Leistungsteil zugeführte Leistung in Abhängigkeit der von der Wegposition der Linearmotoren abhängigen, von den Krafterfassungsmitteln erfassten Kraft auf einen Sollverlauf regelt.

2. Antriebseinheit nach Anspruch 1, **dadurch gekennzeichnet, dass** die Magnetelemente (23,24) in Vorschubrichtung abwechselnd gepolt angeordnet sind und dass die Magnetelemente und die Spulenelemente (26,27) auf gegenüberliegenden Flächen vorgesehen sind, wobei die Magnetelemente (23,24) und/oder Spulenelemente (26,27) wenigstens eines Linearmotors (L1,L2) in Vorschubrichtung zu den Magnetelementen (23,24) und/oder Spulenelementen (26,27) des wenigstens einen anderen Linearmotors versetzt sind.

3. Antriebseinheit nach Anspruch 1, **dadurch gekennzeichnet, dass** jedem Linearmotor (L1,L2) ein gesondertes Leistungsteil (42,43) zugeordnet ist.

4. Antriebseinheit nach einem der vorhergehenden Ansprüche, **dadurch gekennzeichnet, dass** die Linearmotoren (L1,L2) symmetrisch zu einer gemeinsamen, parallel zu Vorschubrichtung (a-a) liegenden Wirkachse angeordnet sind.

5. Antriebseinheit nach einem der vorhergehenden Ansprüche, **dadurch gekennzeichnet, dass** die Linearmotoren (L1,L2) koaxial zueinander angeordnet sind.

6. Antriebseinheit nach einem der vorhergehenden Ansprüche, **dadurch gekennzeichnet, dass** die zylindrischen Linearmotoren (L1,L2) ineinander geschachtelt sind.

7. Antriebseinheit nach einem der vorhergehenden Ansprüche, **dadurch gekennzeichnet, dass** ein hohlzylindrischer Läufer in Form eines Magnetträgers (22) auf seinen beiden Mantelflächen angeordnete Magnetelemente (23,24) aufweist, die zur Bildung der zwei Linearmotoren (L1,L2) aufweisenden Antriebseinheit (D) mit Spulenelementen (26,27) zusammenwirken, die auf Mantelflächen von als Stator ausgebildeten Spulenringen (20,21) angeordnet sind.

8. Antriebseinheit nach einem der vorhergehenden Ansprüche, **dadurch gekennzeichnet, dass** die Magnetelemente (24) und/oder Spulenelemente (26) eines innen liegenden Linearmotors (L2) zu den Magnetelementen (23) und/oder Spulenelementen (27) eines außen liegenden Linearmotors (L1) axial versetzt sind.

**9.** Antriebseinheit nach einem der vorhergehenden Ansprüche, **dadurch gekennzeichnet, dass** der Versatz

$$v = a / (p \times 2)$$

ist mit

p = Anzahl der Phasen des Motors
a = Länge eines Spulenpakets mit p Phasen.

**10.** Antriebseinheit nach einem der vorhergehenden Ansprüche, **dadurch gekennzeichnet, dass** die Magnetelemente (23,24) wenigstens eines Linearmotors (L1,L2) entlang seines Umfangs treppenförmig versetzt sind, wobei vorzugsweise der treppenförmige Versatz (d) der einzelnen Linearmotoren (L1,L2) voneinander unabhängig ist.

**11.** Antriebseinheit nach einem der vorhergehenden Ansprüche, **dadurch gekennzeichnet, dass** die Länge b der Magnetelemente (23,24) der einzelnen Linearmotoren (L1,L2) und die Länge a der darauf abgestimmten Pakete von Sputenelementen (26,27) der einzelnen Linearmotoren voneinander unabhängig ist.

**12.** Antriebseinheit nach einem der vorhergehenden Ansprüche, **dadurch gekennzeichnet, dass** die Spulenelemente (26,27) schräg zur Vorschubrichtung ellipsoidförmig an der Mantelfläche der Linearmotoren (L1,L2) angeordnet sind.

**Claims**

**1.** Drive unit (D) for a machine, especially an injection molding machine for processing plastics materials and other plasticizable substances, including a plurality of linear motors (L1, L2), which are disposed parallel to each other in a common direction of feed (a-a), the parts of the linear motors (L1, L2) with the same action being interconnected for common displacement, wherein the linear motors (L1, L2) include magnetic elements (23, 24) in the direction of feed and coil elements (26, 27) in operative connection therewith, wherein at least one power unit (42, 43) is associated with the linear motors, **characterized in that** force detecting means (40) are provided for detecting the path-dependent force of the linear motors (L1, L2) at least during assembly or respectively commissioning and **in that**, in the operating state, a controller (41) controls, to a required characteristic, the power which is supplied to the linear motors (L1, L2) by the power unit in dependence on the force, which is dependent on the path position of the linear motors and is determined by the force detecting means.

**2.** Drive unit according to claim 1, **characterized in that** the magnetic elements (23, 24) are disposed so as to be polarized alternately in the direction of feed and **in that** the magnetic elements and the coil elements (26, 27) are provided on oppositely situated faces, wherein the magnetic elements (23, 24) and/or coil elements (26, 27) of at least one linear motor (L1, L2) are offset in the direction of feed relative to the magnetic elements (23, 24) and/or coil elements (26, 27) of the at least one other linear motor.

**3.** Drive unit according to claim 1, **characterized in that** a separate power unit (42, 43) is associated with each linear motor (L1, L2).

**4.** Drive unit according to one of the preceding claims, **characterized in that** the linear motors (L1, L2) are disposed so as to be symmetrical relative to a common effective axis, which lies parallel to the direction of feed (a-a).

**5.** Drive unit according to one of the preceding claims, **characterized in that** the linear motors (L1, L2) are disposed coaxially one to the other.

**6.** Drive unit according to one of the preceding claims, **characterized in that** the cylindrical linear motors (L1, L2) are nested into one another.

**7.** Drive unit according to one of the preceding claims, **characterized in that** a hollow cylindrical rotor in the form of a magnet carrier (22) includes magnetic elements (23, 24) disposed on its two lateral surfaces, which magnetic elements (23, 24) interact with coil elements (26, 27) to form the drive unit (D) which includes the two linear motors (L1, L2), said coil elements (26, 27) being disposed on lateral surfaces of coil rings (20, 21) which are configured as stators.

**8.** Drive unit according to one of the preceding claims, **characterized in that** the magnetic elements (24) and/or coil elements (26) of one linear motor (L2) situated on the inside are offset axially relative to the magnetic elements (23) and/or coil elements (27) of one linear motor (L1 ) situated on the outside.

**9.** Drive unit according to one of the preceding claims, **characterized in that** the displacement is $v = a / (p \times 2)$,

where
p = number of phases of the motor
a = length of one coil set with p phases.

**10.** Drive unit according to one of the preceding claims, **characterized in that** the magnetic elements (23, 24) at least of one linear motor (L1, L2) are offset in a stepped manner along its circumference, wherein preferably the stepped displacement (d) of the individual linear motors (L1, L2) is independent of each other.

**11.** Drive unit according to one of the preceding claims, **characterized in that** the length b of the magnetic elements (23, 24) of the individual linear motors (L1, L2) and the length a of the set of coil elements (26, 27) of the individual linear motors, which length is tuned to the length of said magnetic elements, is independent of each other.

**12.** Drive unit according to one of the preceding claims, **characterized in that** the coil elements (26, 27) are disposed inclinedly relative to the feed direction in the form of an ellipsoid on the lateral surface of the linear motors (L1, L2).

**Revendications**

**1.** Unité d'entraînement (D) destinée à une machine, en particulier une machine de moulage par injection pour le traitement de matières plastiques et d'autres masses plastifiables, comportant plusieurs moteurs linéaires (L1, L2) disposés parallèlement les uns aux autres dans une direction d'avance (a-a) commune, dont les parties d'action identique sont réunies entre elles pour leur déplacement commun, les moteurs linéaires (L1, L2) comportant des éléments magnétiques (23, 24) dans la direction d'avance et donc des éléments de bobine (26, 27) en liaison active, au moins une partie d'alimentation (42, 43) étant associée aux moteurs linéaires, **caractérisée en ce que** des moyens de détection de la force (40), destinés à détecter la force dépendant de la course des moteurs linéaires (L1, L2), sont prévus au moins au montage ou à la mise en service, et **en ce qu'**un régulateur (41) régule sur une courbe de consigne, à l'état de fonctionnement, la puissance amenée aux moteurs linéaires (L1, L2) par la partie d'alimentation, en fonction de la force dépendant de la position de la course des moteurs linéaires et enregistrée par les moyens de détection de la force.

**2.** Unité d'entraînement selon la revendication 1, **caractérisée en ce que** les éléments magnétiques (23, 24) sont disposés avec polarité alternée dans la direction d'avance et **en ce que** les éléments magnétiques et les éléments de bobine (26, 27) sont prévus sur des surfaces opposées, les éléments magnétiques (23, 24) et/ou éléments de bobine (26, 27) d'au moins un moteur linéaire (L1, L2) étant décalés, dans la direction d'avance, par rapport aux éléments magnétiques (23, 24) et/ou éléments de bobine (26, 27) d'au moins un autre moteur linéaire.

**3.** Unité d'entraînement selon la revendication 1, **caractérisée en ce qu'**à chaque moteur linéaire (L1, L2) est associée une partie d'alimentation (42, 43) séparée.

**4.** Unité d'entraînement selon l'une des revendications précédentes, **caractérisée en ce que** les moteurs linéaires (L1, L2) sont disposés symétriquement par rapport à un axe d'action commun, situé parallèlement à la direction d'avance (a-a).

**5.** Unité d'entraînement selon l'une des revendications précédentes, **caractérisée en ce que** les moteurs linéaires (L1, L2) sont disposés coaxialement l'un à l'autre.

**6.** Unité d'entraînement selon l'une des revendications précédentes, **caractérisée en ce que** les moteurs linéaires (L1, L2) cylindriques sont emboîtés l'un dans l'autre.

**7.** Unité d'entraînement selon l'une des revendications précédentes, **caractérisée en ce qu'**un rotor cylindrique creux, sous la forme d'un porte-aimant (22), comporte des éléments magnétiques (23, 24) disposés sur ses deux surfaces d'enveloppe, qui coopèrent, pour former l'unité d'entraînement (D) comportant deux moteurs linéaires (L1, L2), avec des éléments de bobine (26, 27) qui sont disposés sur des surfaces d'enveloppe d'anneaux de bobine (20, 21) réalisés comme stator.

**8.** Unité d'entraînement selon l'une des revendications précédentes, **caractérisée en ce que** les éléments magnétiques (24) et/ou éléments de bobine (26) d'un moteur linéaire (L2) situé à l'intérieur sont décalés axialement par rapport aux éléments magnétiques (23) et/ou éléments de bobine (27) d'un moteur linéaire (L1) situé à l'extérieur.

**9.** Unité d'entraînement selon l'une des revendications précédentes, **caractérisée en ce que** le décalage est égal à

$$v = a/(p \times 2)$$

où

p = nombre de phases du moteur

k = longueur d'un paquet de bobines avec p phases

**10.** Unité d'entraînement selon l'une des revendications précédentes, **caractérisée en ce que** les éléments magnétiques (23, 24) d'au moins un moteur linéaire (L1, L2) sont décalés en forme de gradins le long de son pourtour, les décalages (d) en forme de gradins des différents moteurs linéaires (L1, L2) dépendant de préférence les uns des autres.

11. Unité d'entraînement selon l'une des revendications précédentes, **caractérisée en ce que** la longueur (b) des éléments magnétiques (23, 24) des différents moteurs linéaires (L1, L2) et la longueur (a) des paquets adaptés à celle-ci d'éléments de bobine (26, 27) des différents moteurs linéaires dépendent l'une de l'autre.

12. Unité d'entraînement selon l'une des revendications précédentes, **caractérisée en ce que** les éléments de bobine (26, 27) sont disposés obliquement par rapport à la direction d'avance, en forme d'ellipsoïde, sur la surface d'enveloppe des moteurs linéaires (L1, L2).

FIG. 1

FIG. 2

EP 1 378 046 B1

FIG. 3

EP 1 378 046 B1

FIG. 4

Fig.5

FIG. 6

EP 1 378 046 B1

FIG. 7

FIG. 8

FIG. 9